**Europäisches Patentamt**

**European Patent Office**

**Office européen des brevets**

(19)

(11) Veröffentlichungsnummer: **0 401 221 B1**

## (12) EUROPÄISCHE PATENTSCHRIFT

(45) Veröffentlichungstag der Patentschrift:
**11.09.91 Patentblatt 91/37**

(51) Int. Cl.$^5$: **H04B 7/08**

(21) Anmeldenummer: **88910011.1**

(22) Anmeldetag: **28.10.88**

(86) Internationale Anmeldenummer:
**PCT/EP88/00981**

(87) Internationale Veröffentlichungsnummer:
**WO 89/04092 05.05.89 Gazette 89/10**

(54) **EMPFANGSVERFAHREN UND EMPFANGS-ANTENNENSYSTEM ZUR DURCHFÜHRUNG DES VERFAHRENS.**

Verbunden mit 88202467.2/0321997
(europäische
Anmeldenummer/Veröffentlichungsnummer)
durch Entscheidung vom 30.01.91.

(30) Priorität: **31.10.87 DE 3737011**
**22.10.88 DE 3836046**

(43) Veröffentlichungstag der Anmeldung:
**12.12.90 Patentblatt 90/50**

(45) Bekanntmachung des Hinweises auf die
Patenterteilung:
**11.09.91 Patentblatt 91/37**

(84) Benannte Vertragsstaaten:
**AT BE CH DE ES FR GB IT LI NL SE**

(56) Entgegenhaltungen:
**EP-A- 0 199 058**
**EP-A- 0 201 977**

(56) Entgegenhaltungen:
**Review of the Electrical Communication Laboratories, Vol. 25, No. 1,2, January/February 1977, (Tokio, JP), Y. Okamoto: "Space diversity reception for ocean microwave communication systems", pages 149-162**

(73) Patentinhaber: **RICHARD HIRSCHMANN GMBH & CO.**
**Richard-Hirschmann-Strasse 19 Postfach 110**
**W-7300 Esslingen a.N. (DE)**

(72) Erfinder: **SCHENKYR, Dieter**
**Lessing-Str. 30**
**W-7312 Kirchheim (DE)**
Erfinder: **BUCK, Walter**
**Steinwaldstr. 90**
**W-7000 Stuttgart 70 (DE)**

(74) Vertreter: **Geyer, Ulrich F., Dr., Dipl.Phys. et al**
**Wagner & Geyer Patentanwälte Postfach 22 14 39 Gewürzmühlstrasse 5**
**W-8000 München 22 (DE)**

EP 0 401 221 B1

## Beschreibung

Die Erfindung betrifft ein Empfangsverfahren mit mehreren einzelnen Empfangsantennen, bei dem einem Antennenausgangssignal eine Phasenmodulation aufgeprägt wird, die Antennensignale summiert werden und das Summensignal nach Amplitude demoduliert wird. Die Erfindung betrifft weiterhin ein Empfangs-Antennensystem zur Durchführung des Verfahrens mit mehreren einzelnen Empfangsantennen, einem Phasenmodulator, einer Summierschaltung und einem Amplituden-Demodulator.

Bei mobilem Empfang, beispielsweise beim Empfang von Rundfunk und/oder Fernsehsendungen in Kraftfahrzeugen treten Empfangsstörungen auf, die den Empfang erheblich beeinträchtigen. Derartige Empfangsstörungen beruhen auf der Einstrahlung der Rundfunk- bzw. Fernsehwellen aus mehr als einer Richtung auf die Antenne. Dieser sogenannte Mehrwegeempfang tritt dadurch auf, daß die Rundfunk- bzw. Fernsehwellen nicht nur vom Sender direkt zur Antenne gelangen, sondern beispielsweise an Gebäuden reflektiert werden und auf anderen Wegen ebenfalls die Empfangsantenne erreichen. Die Empfangswege für die mehreren, von der Empfangsantenne aufgenommenen Signale sind unterschiedlich lang, so daß im Rundfunk- bzw. Fernsehsignal besonders bei frequenzmoduliertem Träger Interferenzstörungen auftreten, wodurch der resultierende Träger sowohl eine Amplitudenmodulation als auch eine Phasenmodulation erfährt. Diese ergeben dann die lästigen und den Empfang erheblich beeinträchtigenden Empfangsstörungen, die aufgrund der physikalischen Gegebenheiten unabhängig von der Antennenart, seien es Teleskopantennen, elektronische Kurzstabantennen oder elektronische Scheibenantennen, auftreten.

In einem Aufsatz von R. Heidester & K. Vogt in NTZ 1958, Heft 6, Seiten 315-319 ist beispielsweise ein Empfangsantennensystem beschrieben, das zur Verringerung dieser aufgrund von Mehrwegeempfang auftretenden Störungen mehrere einzelne Empfangsantennen für den mobilen Empfang aufweist. Bei dieser bekannten Anordnung ist jeder Einzelantenne ein Empfänger zugeordnet, mit dem die Amplitude jedes Einzelsignals der jeweiligen Einzelantenne kontinuierlich festgestellt und überwacht wird. Die ermittelten Amplituden werden verglichen und das jeweils stärkste Signal einer Einzelantenne wird als Empfangssignal verwendet. Diese Art eines Diversity-Systems, auch als Parallel- oder Empfänger-Diversity-System bezeichnet, ist jedoch schaltungstechnisch sehr aufwendig, da jede Antenne mit einem Empfänger versehen sein muß. Darüber hinaus ist nicht gesagt, daß die das stärkste Antennensignal abgebende Einzelantenne, die mit dem Rundfunkempfänger gemäß dem besagten Kriterium verbunden wird, notwendigerweise das beste Signal liefert, was insbesondere für frequenzmodulierte Signale gilt.

Beispielsweise aus der EP O 201977 A2, der DE 3334735 A2 und der Zeitschrift "Funkschau", 1986, Seiten 42-45 ist ein weiteres Empfangs-Antennensystem der eingangs genannten Art bekannt, bei dem von einer Antenne zur anderen oder von einer Linearkombination aus Antennenspannungen zu anderen Linearkombinationen umgeschaltet wird, wenn eine vorgegebene Schwelle der Empfangsqualität unterschritten wird. Dieses auch als Scanning-Diversity oder Antennen-Auswahl-Diversity-System bezeichnete Verfahren hat jedoch den wesentlichen Nachteil, daß desr Schaltvorgang erst bei eingetretener Störung ausgelöst wird. Um dabei einen für den Benutzer zufriedenstellenden, unhörbaren Übergang zwischen den Antennen bzw. Linearkombinationen aus Antennenspannungen zu erreichen, muß das Umschalten extrem schnell vonstatten gehen, was schaltungstechnisch schwierig, sehr aufwendig und dennoch nur begrenzt möglich ist. Ein weiterer wesentlicher Nachteil dieses Empfangssystems besteht auch darin, daß eine Antenne, die ein relativ schlechtes Empfangssignal liefert, das jedoch knapp unterhalb der Schaltschwelle liegt, weiter in Betrieb gehalten wird, obgleich andere Antennen bessere Empfangssignale mit geringeren Störungen liefern. Weiterhin wird bei Auftreten von Störungen an der gerade aktivierten Antenne auf eine willkürlich gewählte folgende Antenne bzw. Linearkombination von Antennenspannungen umgeschaltet, die ebenfalls gestört sein kann, oder, wie zuvor beschrieben, gerade noch unterhalb der Schaltschwelle liegt. Die Empfangseigenschaften dieses Diversity-Systems sind daher nicht befriedigend.

Aus der DE 3510580 A1 ist ein Antennen-Empfangsverfahren bzw.-system bekannt, bei dem die Phase eines Empfangssignals willkürlich bzw. statistisch sprunghaft geändert und die dadurch eintretende Amplitudenänderung gemessen wird. Die Einstellung der optimalen Phasenlage erfolgt dabei also nach dem Prinzip "Versuch und Irrtum" in mehreren Schritten. Es wird also eine Phasenänderung ausgelöst und ermittelt, ob dadurch eine bessere oder schlechtere Gesamtamplitude erreicht wird. Das Ergebnis wird dabei jeweils in einem Prozessor gespeichert. Durch die "Versuch und Irrtum"-Methode kann sich zeitweise also auch eine Verschlechterung der Empfangsbedingungen ergeben.

Aus der US-PS 4,079,318 ist ein bekanntes Empfangsverfahren mit mehreren einzelnen Empfangsantennen bekannt, bei dem einem Antennenausgangssignal mittels eines Phasenmodulators eine Phasenmodulations aufgeprägt wird. In einer Summierschaltung wird das phasenmodulierte Ausgangssignal zum nicht phasenmodulierten anderen Antennenausgangssignal addiert. Nach Frequenzumsetzung und einer Zwischenfrequenz-Verstärkung in einer herkömmlichen Empfangsschaltung wird das Summensignal in einem nachge-

2

ordneten Amplitudendetektor und einem Synchrondetektor bezüglich der Amplitude demoduliert. Daraus ergibt sich ein Regelsignal, mit dem ein Phasendrehglied kontinuierlich so geregelt wird, daß die Eingangssignale der Summierschaltung auf eine einheitliche Phasenlage gebracht werden.

Dieses bekannte Verfahren ist für die Übertragung im Mikrowellenbereich zur Verringerung der sogenannten Fading-Effekte vorgesehen, wobei das Mikrowellenübertragungssystem ein einziges elektromagnetisches Signal mit zwei oder mehreren Antennen empfängt. Dieses bekannte Empfangsverfahren ist also für Richtfunkstrecken und damit für stationäre Antennen vorgesehen. Mit diesem bekannten Regelverfahren werden die Empfangskeulen von Richtfunkantennen nachgeführt, um einen optimalen Empfang bei stationären Empfangsantennen zu erhalten. Die Nachführung erfolgt dabei im Minuten- oder Stundenbereich, also relativ langsam. Es besteht keine Notwendigkeit, eine schnelle Nachführung vorzusehen, da sich die Empfangskeulen — wie gesagt — nur langsam in den genannten Zeiträumen ändern. Eine Anwendung dieses bekannten Verfahrens auf den Mobilfunk, insbesondere den UKW-Rundfunkempfang in Kraftfahrzeugen mit einer niedrigsten übertragenen Frequenz von 40 Hz, ist damit nicht möglich, da beim mobilen Empfang Nachführzeiten kleiner als 20 msec erforderlich sind. Die Nachführungsgeschwindigkeit ist bei mobilem Kraftfahrzeugempfang also um Größenordnungen schneller. Darüberhinaus können die bei dem bekannten Verfahren vorliegenden erheblich längere Nachführzeiten zu Geräuschen im hörbaren Bereich führen, wie dies nachfolgend in dem aus der mit der DE 3510580 A1 bekannten Stand der Technik noch im einzelnen erläutert wird.

Eine schnelle Regelung, wie sie bei Mobilfunk-Diversity-Systemen aus den genannten Gründen erforderlich ist, ist bei stationären Diversity-Systemen nicht nur entbehrlich, sondern auch wegen der dabei auftretenden Störungen nicht möglich. Bei dem aus der US 4,079,318 bekannten Verfahren, wird das eine Antennenausgangssignal mit einem Niederfrequenzsignal phasenmoduliert. Dadurch muß die Regelung notwendigerweise langsam erfolgen, weil durch diese niederfrequente Modulation nur mit einer relativ geringen Geschwindigkeit den Schwankungen der Störgrößen gefolgt werden kann. Auch aus diesem Grunde ist dieses bekannte stationäre Diversity-Empfangsverfahren für den Mobilfunk-Diversity-Empfang nicht geeignet.

Weiterhin ist bei dem bekannten Verfahren die Frequenzbandbreite für das Basisbandsignal begrenzt, wobei der untere Frequenzbereich aufgrund des Niederfrequenz-Modulationssignals nicht ausgenützt werden kann. Auch aus diesem Grunde ist das bekannte Empfangsverfahren für den Mobilfunk-Diversity-Empfang nicht geeignet.

Bei den stationären Diversity-Empfangssystemen im Mikrowellenbereich sind die Phasenabweichungen wegen des dann einsetzenden Regelvorgangs relativ gering und gehen über 90° Phasenabweichung nicht hinaus. Damit liegen auch die Regelsignale nur innerhalb eines engen Signal- bzw. Spannungsbereichs. Das Regelsignal bleibt immer proportional der Phasenabweichung. Der bei sehr großen Phasenabweichungen entstehende Rückgang des Regelsignals sowie der bei 180° Phasenabweichung auftretende indifferente Bereich werden nicht erreicht. Demgegenüber ist bei Mobil-Diversity-Systemen mit großen, über den gesamten Phasenbereich von 360° hinweggehenden Phasenabweichungen und -sprüngen und hohen Änderungsgeschwindigkeiten (RayleighFading) zu rechnen. Ein Regelungsverfahren, wie es in der EP-0227015 A2 für stationäre Diversity-Systeme beschrieben ist, wäre in diesem Fall aufgrund des langsamen Ansprechens und auch deshalb nicht verwendbar, weil die Regelung bei Indifferenzen noch langsamer werden würde.

Ein weiterer grundsätzlicher Unterschied zwischen Diversity-Empfangsverfahren für stationäre Richtfunkübertragungen und den mobilen Empfang in Kraftfahrzeugen besteht insbesondere auch darin, daß die einzelnen Antennen bei Richtfunksystemen im Gegensatz zu Mobilfunk-Diversity-Antennen beispielsweise an Kraftfahrzeugen immer ein Signal empfangen, wogegen beim Mobilfunk jede Antenne aufgrund der sehr unterschiedlichen Einfallswinkel und Charakteristika das Signal in jeder beliebigen Phasen-als auch Amplitudenlage empfangen kann, bis hin zum vollständigen Ausfall. Während also stationäre Antennen zur optimalen Ausrichtung auf die Empfangskeule lediglich relativ langsam nachgeführt werden müssen, ist es bei mobilen Diversity-Systemen erforderlich, nicht nur Phasenänderungen, sondern auch Amplitudenänderungen in extrem großen Änderungsbereichen festzustellen und zu verarbeiten. Dies ist mit dem aus der EP 0227015 A2 bekannten Empfangsverfahren nicht möglich.

Der Erfindung liegt daher die Aufgabe zugrunde, ein Empfangsverfahren und ein Empfangs-Antennensystem zu schaffen, das für den Mobilfunk, insbesondere für den Kraftfahrzeug-Rundfunkempfang geeignet ist und sehr schnelle Änderungen der von den einzelnen Antennen empfangenen Signale, beispielsweise UKW-Signale, sowohl phasenmäßig als auch amplitudenmäßig über große Änderungsbereiche hinweg festsellen, verarbeiten und die dabei gewonnene Information für eine Optimierung des Diversity-Empfang ausnützen kann.

Ausgehend von dem aus der US 4079318 bekannten Empfangsverfahren wird diese Aufgabe erfindungsgemäß dadurch gelöst, daß den einzelnen Antennenausgangssignalen eine Hilfsmodulation in Form einer Phasen- und/oder Amplitudenmodulation mittels eines Hilfsmodulationssignals aufgeprägt wird, das in einer Empfangsschaltung verstärkte und selektierte Summensignal in einem Frequenz- und Amplitudendemodulator nach Betrag und Frequenz und/oder Phase demoduliert wird, das Hilfsmodulationssignal aus dem demodulierten Signal ausgefiltert wird und mit Hilfe von Synchron-Demodulatoren Real- und Imaginärteil des einzelnen Antennensignals in Bezug auf das Summensignal ermittelt und daraus Phasenlage und Amplitudenbeitrag des Einzelsignals bezüglich des Summensignals abgeleitet werden, und die Phasen und/oder die Amplituden der hochfrequenten Einzelsignale in Abhängigkeit von der ermittelten Phasenlage und/oder des ermittelten Amplitudenbeitrags in Richtung auf optimalen Amplitudenbeitrag jeweils geändert werden.

Aufgrund der erfindungsgemäßen Maßnahmen, den einzelnen Antennenspannungen eine Hilfsmodulation aufzuprägen, alle Antennenspannungen anschließend zu addieren und das sich daraus ergebende Summensignal der Empfangsschaltung zuzuleiten, ist es möglich, durch Auswertung der resultierenden Modulation des Summensignals bei Demodulation desselben die Phasenlage der einzelnen Antennensignale bezüglich der Phasenlage zum Summensignal und/oder den Amplitudenbeitrag der jeweiligen Einzelsignale zur Amplitude des Summensignals festzustellen. Durch die auf diese Weise erhaltene Information können nachfolgende Steuerungen oder Schaltvorgänge zur Optimierung der Einzelsignale oder des im Empfänger weiter zu verarbeitenden Signals vorgenommen werden.

Aufgrund der Hilfsmodulation reicht es bei der vorliegenden Erfindung aus, lediglich einen Empfänger vorzusehen. Dennoch liegen Informationen über alle Antennenspannungen vor, so daß diese Informationen jederzeit für Optimierungen, Steuerungen und Schaltvorgänge herangezogen werden können.

Ein weiterer Vorteil des erfindungsgemäßen Empfangsverfahrens besteht insbesondere auch darin, daß es mehr oder weniger kontinuierlich auf Abweichungen vom Optimum und nicht erst dann reagiert, wenn eine Störung bereits eingetreten ist. Auf diese Weise steht wesentlich mehr Zeit für die Optimierung und für eine Steuerung bzw. einen Schaltvorgang zur Verfügung, als dies der Fall wäre, wenn das Eintreten einer Störung abgewartet werden müßte.

Vorteilhaft ist es weiterhin, daß sich das Empfangssystem unabhängig von den Anfangsbedingungen immer auf das Signal mit geringsten Störungen ausrichtet. Das heißt, das Empfangssystem verharrt nicht bei einem bestimmten Empfangssignal oder einer Linearkombination von Empfangssignalen, das bzw. die gerade noch unterhalb einer Schaltschwelle liegt bzw. liegen, wie dies bei herkömmlichen Verfahren der Fall ist. Vielmehr wird ständig auf eine bessere Antenne bzw. eine bessere Linearkombination von Einzelsignalen eingestellt, so daß dadurch die Empfangsqualität erheblich gesteigert werden kann.

Da bei dem erfindungsgemäßen Empfangsverfahren eine phasenrichtige Summierung der einzelnen Antennensignale erfolgt, sind Signalenergien aller Einzelantennen ausnutzbar, denn die Summe aller Antennensignale ist dadurch besser als jedes Einzelsignal und insbesondere werden Störungen einer Einzelantenne statistisch ausgemittelt, so daß sich auch unter diesem Gesichtspunkt eine wesentlich bessere Empfangsqualität ergibt. Mit dem erfindungsgemäßen Empfangsverfahren ist es auch möglich, bei frequenzselektiver Störung ein kombiniertes, ungestörtes Empfangssignal aus mehreren gestörten Einzelsignalen zu erzeugen. Vorteilhaft ist weiterhin, daß das erfindungsgemäße Empfangsverfahren unabhängig von selektiver Dämpfung durch beschattung im Fahrbetrieb, auch Fading genannt, arbeitet.

Die Hilfsmodulation der einzelnen Antennenausgangssignale muß für jedes Signal jeweils unabhängig von den anderen Signalen ausgewertet werden. Daher kann die Modulation der einzelnen Antennenausgangssignale jeweils zeitlich nacheinander vorgenommen werden. Es ist jedoch auch möglich, die Hilfsmodulation für die einzelnen Antennenausgangssignale mit unterschiedlichen Frequenzen vorzunehmen, wobei die Modulation danach gegebenenfalls gleichzeitig erfolgen kann.

Bei dem erfindungsgemäßen Diversity-Empfangsverfahren wird also das Summensignal nicht nur nach der Amplitude, sondern nach Betrag und Phase in Bezug auf das Summensignal demoduliert, so daß sowohl hinsichtlich der Phasenlage als auch hinsichtlich des Amplitudenbeitrags eine Regelung bzw. Steuerung möglich ist. Darüberhinaus werden sowohl der Real als auch der Imaginärteil des jeweiligen, einzelnen Antennensignals in Bezug auf das Summensignal ermittelt, so daß neben Amplitude und Phase auch das Vorzeichen vorliegt. Dadurch können nicht nur Phasendrehungen, sondern auch Sprünge in Gegenphase, wie sie mit den für Rayleigh-Fading typischen Nulldurchgängen verbunden sind, sicher erkannt und in einem einzigen Schaltvorgang ausgeglichen werden.

Gegenüber der o.g. DE 3510580 A1 werden bei dem erfindungsgemäßen, vorliegenden Verfahren sowohl die Phase als auch die Amplitude der Einzelsignale bezüglich des Summensignals eindeutig gemessen und in Abhängigkeit davon eine gezielte, exakt bestimmte Einstellung der Phasenglieder vorgenommen. Die Zahl der Arbeitsschritte ist dadurch erheblich reduziert. Das hat den Vorteil, daß auch entsprechend weniger Umschaltungen erforderlich sind, wodurch auch durch Umschaltungen erzeugte Reststörungen bei der vorliegenden Erfindung wesentlich geringer sind. Um bei der bekannten Anordnung nämlich noch schnell genug vor Erreichen eines Minimums reagieren zu können, darf bei einem schnellen, beispielsweise 150 Stundenkilometer fahrenden Auto, bei dem der zeitliche Abstand zweier aufeinanderfolgender Empfangsminima im UKW-Bereich im günstigsten Fall 1,5 Meter/150 km/h, also 36 Millisekunden beträgt, deshalb nur 36 Millisekunden/4 = 9 Millisekunden je Antenne nicht überschreiten, wenn das Diversity-System vier Antennen aufweist. Um ein Minimum zu vermeiden, sind mindestens 4 Messungen erforderlich. Das bedeutet, daß die Meßzeit in der Größenordnung von 2,25 Millisekunden, also in einer Frequenz von 440 Hertz liegt. Diese Frequenz befindet sich jedoch gerade im Bereich der höchsten Empfindlichkeit des Ohrs, so daß die durch die bei der bekannten Schaltung häufige Umschaltung entstehenden Störgeräusche erheblich werden, und die gegebenenfalls auftretenden Empfangsverbesserungen durch diese durch Umschaltung erfolgenden Störgeräusche aufgehoben wird. Da die Hilfsfrequenz in einem nicht genutzten Meßkanal liegt, wird das Nutzsignal durch die Messung überhaupt nicht beeinflußt.

Der grundsätzliche Unterschied zwischen der aus DE 3510580 A1 bekannten Schaltungsanordnung und dem vorliegenden Verfahren besteht insbesondere auch darin, daß die Antennensignale in dort verwendeten Mischern in eine andere Frequenz umgesetzt werden. Dagegen bleiben die Antennensignale bei der vorliegenden Erfindung in der Originalfrequenzlage, es werden ihnen nur zusätzliche Komponenten beigefügt. Das bedeutet, daß mit dem bei dem bekannten Verfahren verwendeten Addierer im Zwischenfrequenz- und nicht im Hochfrequenz-Bereich, wie dies bei der vorliegenden Erfindung der Fall ist, summiert wird. Dem nachfolgenden Zwischenfrequenzverstärker des bekannten Verfahrens fehlen zu einer Empfangsschaltung definitionsgemäß die zur Frequenzeinstellung nötigen Komponenten, z.B. Vorkreis und Mischer. Diese Teile müssen für jede Antenne getrennt vorhanden sein, was einen erheblichen schaltungstechnischen Aufwand darstellt. Im Gegensatz dazu werden bei der vorliegenden Erfindung die Signale auf der Hochfrequenzseite vor der Empfangsschaltung addiert, so daß übliche Rundfunkempfänger mit nur sehr geringen Anpassungen an das Diversity-System verwendet werden können.

Darüberhinaus wird das verstärkte und selektierte Summensignal bei der Schaltungsanordnung gemäß der DE 3510580 A1 vom Amplitudendemodulator als Gesamtsignal demoduliert. Bei der vorliegenden Erfindung wird das verstärkte und selektierte Summensignal nach Betrag und/oder Phase der Hilfsmodulationskomponente demoduliert. Im Gegensatz zu der bekannten Schaltungsanordnung wird dabei die Phaseninformation nur wenig durch die bei Mehrwegeempfang auftretende StörAmplitudenmodulation beeinflußt. Dadurch wird Information in wesentlich höherer Qualität gewonnen.

Das in der EP 0227015 A2 beschriebene Diversity-System ist mit zwei Empfangsantennen ausgestattet. Bei Verwendung von mehr als zwei Empfangsantennen müssen alle Differenzphasen gemessen werden. Dies bedingt n(n-1) Meßanordnungen, also einen erheblichen apparativen Aufwand. Demgegenüber wird bei der vorliegenden Erfindung die Phasentrennung der Einzelsignale in Bezug auf den Summenzeiger in einer immer eindeutigen, auf das Optimum weisenden Richtung vorgenommen. Der Geräteaufwand beschränkt sich dabei auf eine mit der Antennenzahl linear ansteigende Anzahl von Amplituden-Modulatoren und Phasendrehgliedern. Die Auswerteeinrichtung selbst ist immer nur einfach vorhanden.

Vorzugsweise wird das nach Betrag und Frequenz bzw. Phase demodulierte Signal kohärent mit dem Hilfsmodulationssignal demoduliert. Es ergibvt sich eine Selektion des Hilfssignals aus dem demoduliertem Signalgemisch. Die dadurch gewonnenen In-Phase-Komponenten des Hilfsmodulationssignals stellen Real- und Imaginärteil des in der Phase gedrehten Hilfsmodulationssignals dar. Ist beispielsweise die Hilfsmodulation eine Amplitudenmodulation, liefert das synchron demodulierte Ausgangssignal des Amplitudenmodulations-Detektors den Realteil. Der Frequenzmodulation-Demodulator liefert das differenzierte Phasenmodulations-Signal. Daraus wird mit Hilfe des Synchrondemodulators der um 90° in der Phase gedrehte Imaginärteil.

Werden die Synchron-Demodulatoren gegenüber dem zuvor beschriebenen Fall mit dem um 90° phasengedrehten Hilfsmodulationssignal betrieben, muß bei einer Schaltungsanordnung mit idealen Bauelementen, d.h. mit Bauelementen, die beispielsweise keine Verzerrungen und sonstige Störungen des zu verarbeitenden Signals bewirken, das Ausgangssignal verschwinden. Normalerweise sind die Rundfunkgeräte bei Verwendung des erfindungsgemäßen Empfangsverfahrens vorgegeben oder liegen vor. Diese Rundfunkgeräte sind jedoch mit Bauteilen aufgebaut, die keine idealen Bauelemente sind. Dadurch kann der zuvor beschriebene Idealzustand, daß das Ausgangssignal verschwindet, nicht erreicht werden. Gemäß einer Weiterbildung der Erfindung wird das demodulierte Signal daher zusätzlich mit dem um 90° phasenverschobenen Hilfsmodulationssignal kohärent demoduliert, und das in dieser Weise erhaltene Signal zur Kompensation von Störungen eingesetzt, die durch nicht ideale, zur Realisierung des Empfangsverfahrens erforderliche Bauelemente entstehen.

Besonders vorteilhaft ist es gemäß einer Weiterführung der Erfindung, wenn die Hilfsmodulation eine Amplituden- und Phasenmodulation ist, das Verhältnis zwischen den beiden Modulationsarten vom Nutzsignal gesteuert wird. Auf diese Weise können vom augenblicklichen Signalzustand abhängende Störeinflüsse kompensiert werden.

Eine weitere Ausführungsform der Erfindung besteht darin, daß die Phasen und/oder die Amplituden der hochfrequenten Einzelsignale in Abhängigkeit von der ermittelten Phasenlage und/oder des ermittelten Ampli-tudenbetrags nur in vorgegebene Phasen- und/oder Amplitudenzustände geändert werden.

5

Dies bedeutet, daß bestimmte bevorzugte und insbesondere sinnvolle Zustände vorgegeben sind, die je nach der ermittelten Phasenlage und/oder des ermittelten Amplitudenbetrags entsprechend ausgewählt und eingestellt bzw. aktiviert werden. Auf diese Weise ist insbesondere auch sichergestellt, daß nur sinnvolle und eindeutige Zustände ausgewählt und eingestellt werden.

Besonders vorteilhaft ist es in diesem Zusammenhang, die Phasen der hochfrequenten Einzelsignale derart zu ändern, daß nur einseitige Richtdiagramme erzeugt werden. Dadurch wird ein Mehrwegeempfang noch unwahrscheinlicher.

Als Hilfsmodulation ist sowohl eine Phasen- als auch eine Amplitudenmodulation sowie eine Kombination beider Modulationsarten möglich.

Eine besonders bevorzugte Ausführungsform des erfindungsgemässen Empfangsverfahrens besteht darin, daß das jeweils ausgewertete hochfrequente Einzelsingal in Richtung der Phase des Summensignals gedreht wird. Wie im weiteren anhand des Ausführungsbeispiels noch im einzelnen beschrieben wird, ergibt sich auf diese Weise ein stetiges Optimieren des Eingangssignals für die Empfangsschaltung in dem Sinne, daß Störungen aufgrund von Mehrwegeempfang besonders gut minimiert werden. Bei dieser Ausführungsform des Empfangsverfahrens wird das jeweilige hochfrequente Einzelsignal in Richtung der Phase des hochfrequenten Summensignals gedreht, d.h. die Phase des hochfrequenten Einzelsignals wird in Abhängigkeit von dem Signal, das eine Information über die Phasenlage und/oder den Amplitudenbeitrag eines Einzelsignals bezüglich der Phasenlage bzw. der Amplitude des Summensignals enthält, so gesteuert bzw. verändert, daß die Phase des hochfrequenten Einzelsignals auf die Phase der Summenspannung ausgerichtet wird. Auf diese Weise ergibt sich eine optimale Störunterdrückung für das im Empfangsgerät auszuwertende Empfangssignal.

Bei Änderung der Phase des jeweiligen hochfrequenten Einzelsignals ist es vorteilhaft, wenn die Antennendiagramme so gewählt sind, daß sie im wesentlichen Runddiagramme sind, die eine möglichst gleichmäßige Diagrammform aufweisen. Damit lassen sich optimale Richtdiagramme synthetisieren.

Vorteilhaft ist es, wenn die Hilfsmodulation in einer vorgegebenen Taktfolge den einzelnen Antennenausgangssignalen nacheinander aufgeprägt wird. Die Taktfolge sollte dabei vorzugsweise in der Größenordnung von Millisekunden liegen, damit im UKW-Bereich, d.h. im 100 MHz-Bereich bei einer Fahrzeuggeschwindigkeit von 150 km/Stunde mehrere Abtastungen pro Viertelwellenlänge Fahrstrecke erfolgen.

Eine alternative Ausgestaltung der Erfindung besteht darin, daß die Taktfolge von der Geschwindigkeit eines Fahrzeugs gesteuert wird, wobei das Signal zur Steuerung der Taktfolge vorzugsweise vom Tachometer des Fahrzeugs abgeleitet wird. Durch die Steuerung der Taktfolge in Abhängigkeit von der Fahrzeuggeschwindigkeit läßt sich die Modulations-Taktfolge der Einzelsignale noch weiter optimieren.

Eine weitere erfindungsgemäße Ausgestaltung des Empfangsverfahrens besteht darin, daß der Einsatzzeitpunkt, zu dem den einzelnen Antennenausgangssignalen Hilfsmodulationen vorzugsweise nacheinander aufgeprägt werden, durch das Nutzsignal selbst gesteuert wird. Dabei ist es besonders vorteilhaft, wenn die Taktfolge bei Auftreten des Nulldurchgangs des Nutzsignals getriggert wird. Auf diese Weise ist sichergetellt, daß immer an derselben Frequenz im Übertragungskanal die entsprechende Messung der Phasenlage eines Einzelsignals bezüglich der Phasenlage des Summensignals und/oder der Amplitudenbeitrag eines Einzelsignals zur Amplitude des Summensignals gemessen wird. Dies bedeutet, daß durch unterschiedliche Frequenzen oder Amplituden des Nutzsignals keine Meßfehler entstehen können.

Eine besonders vorteilhafte Ausgestaltung des erfindungsgemässen Empfansverfahrens besteht darin, daß aus den Antennenausgangssignalen Linearkombinationen gebildet werden, denen die Hilfsmodulation aufgeprägt wird. Das heißt, die Hilfsmodulation wird nicht den Antennenausgangssignalen, sondern Linearkombinationen derselben aufgeprägt. Durch die Verwendung von Linearkombinationen der Antennenausgangssignale kann die Störunterdrückung bei Empfangssystemen weiter verbessert werden.

Wie im Falle des bereits beschriebenen Ausführungsbeispiels, wonach die einzelnen Antennendiagramme wenigstens angenähert Runddiagramme sind, ist es auch hier aus denselben Gründen vorteilhaft, wenn die durch Linearkombination gebildeten Antennendiagramme wenigstens angenähert Runddiagramme sind.

Sehr vorteilhaft ist insbesondere auch eine Ausgestaltung des erfindungsgemäßen Verfahrens, wonach die Modulationsparameter der modulierten Antennenausgangssignale derart gewählt sind, daß die Hilfsmodulationsfrequenzen in einem nicht genutzten Frequenzbereich eines Übertragungskanals auftreten. Dies gilt somit auch für das modulierte Summensignal. Auf diese Weise ist sichergestellt, daß durch die Modulationsvorgänge gemäß des hier beschriebenen Verfahrens die Signale selbst nicht gestört werden.

Die Erfindung ist vorteilhaft auf den Empfang von Stereo-Multiplex-Signalen anwendbar. In diesem Falle sollten die durch die Hilfsmodulation dem Antennensignal bzw. den Linearkombinationen zugefügten Spektralanteile in einem Frequenzbereich ausserhalb des Nutzbereichs, also oberhalb von 57 kHz und/oder um 17 und/oder 21 kHz liegen.

Eine weitere Ausgestaltung der Erfindung besteht darin, als Steuer- bzw. Schaltsignal, etwa zur Drehung des jeweils ausgewerteten hochfrequenten Einzelsignals in Richtung der Phase des Summensignals, ein Digitalsignal zu verwenden. Dazu ist erfindungsgemäß vorgesehen, daß die Phasendifferenz zwischen dem jeweiligen Einzelsignal und dem Summensignal und/oder der Amplitudenbeitrag eines Einzelsignals zur Amplitude des Summensignals in ein Digitalsignal umgesetzt wird.

Die Quantisierung der Phase ist an sich beliebig, vorzugsweise wird jedoch eine 2-Bit- oder eine 3-Bit-Quantisierung der Phase, die einem ±90° bzw. einem ±45°-Winkel entspricht, gewählt. Dadurch kann die Analog-Digital-Umsetzung auf eine einfache Schwellendetektion beschränkt werden, so daß die Schaltungsanordnung noch weiter vereinfacht wird. Eine Quantisierung mit höherer Bit-Zahl bringt praktisch keine merkliche Verbesserung der Empfangsqualität. Sogar eine 1-Bit-Quantisierung mit einem ±180°-Umschaltwinkel ergibt bereits eine merkliche Verbesserung der Empfangsqualität.

Gemäß einer weiteren vorteilhaften Ausführungsform der Erfindung wird eine einzelne Empfangsantenne deaktiviert, wenn der Amplitudenbeitrag eines Einzelsignals zum Summensignal unter einen vorgegebenen Schwellwert absinkt. Dies ist dadurch möglich, daß Informationen über die Amplitude der Einzelsignale vorliegt, so daß in Abhängigkeit von dieser Information beispielsweise in der zuvor beschriebenen Weise Einzelantennen abgeschaltet werden oder andere Schaltmaßnahmen zusätzlich ausgeführt werden. Der Einsatz dieser Information über die Amplitude für das Abschalten von Einzelantennen mit geringem Empfangssignalanteil ist jedoch besonders vorteilhaft, da derartige Antennen mit kleinem Amplitudenanteil im wesentlichen nur einen Rauschbeitrag zum Gesamtsystem leisten und daher eher nachteilig sind. Das Empfangssignal einer solchen abgetrennten Antenne kann dennoch weiter kontinuierlich gemessen werden, wenn dem Summensignal das trägerlose Zweiseitenband-modulierte Signal der Antenne zugeführt wird.

Eine weitere bevorzugte Ausführungsform der Erfindung besteht darin, daß die Hilfsmodulation den jeweiligen Einzelsignalen während eines vorgegebenen Zeitintervalls pro Periode des Nutzsignals aufgeprägt wird. Auf diese Weise ist sichergestellt, daß die Aufprägung der Hilfsmodulation auf das jeweilige Einzelsignal zu einem definierten Zeitpunkt vorgenommen wird, vorzugsweise dann, wenn zu diesem festen Zeitpunkt eine bestimmte konstante Amplitude vorliegt. Besonders vorteilhaft ist diese Ausführungsform dann, wenn das Nutzsignal ein Video-Signal ist und die Hilfsmodulation während der Zeilen- oder Bild-Aus-Tastlücke des jeweiligen Einzelsignals aufgeprägt wird. Die Zeilen- oder Bild-Austastlücke weist in jeder Periode im wesentlichen dieselbe Amplitude auf. Dadurch sind konstante, definierte Verhältnisse vorgegeben und es können keine Meßfehler des Systems aufgrund unterschiedlicher Pegel auftreten, was der Fall wäre, wenn die Hilfsmodulation während des Intervalls aufgeprägt wird, in dem die eigentliche Video-Information mit unterschiedlichsten Amplituden übertragen wird. Durch dieses weitere Merkmal wird die Modulation des Einzelsignals einer Zeitbedingung unterworfen, so daß sich innerhalb der Periode eine Art Zeit-Multiplex-Verfahren ergibt.

Eine weitere Ausführungsform der Erfindung sieht auch vor, das Empfangsverfahren ganz oder teilweise in Abhängitkeit von einem Steuersignal zu deaktivieren bzw. zu aktivieren. Bekanntermaßen treten relativ starke Störsignale auf, wenn elektrische Hilfsmotoren beispielsweise für Rückspiegelverstellung oder den Scheibenwischer eingeschaltet werden. In Abhängigkeit davon können einzelne Antennen deaktiviert oder anderweitige Maßnahmen zur Einwirkung auf das Gesamtsystem getroffen werden.

Gemäß einer Weiterbildung ist es auch möglich, das Empfangsverfahren nur dann zu aktivieren, wenn eine vorgegebene Störschwelle überschritten wird. Zur Ermittlung, ob der Störpegel einen bestimmten Schwellwert überschritten hat, kann beispielsweise ein Stördetektor vorgesehen sein.

Das Übertragungsverhalten der Empfangsschaltung ist im praktischen Fall hinsichtlich des Phasen- und/oder Amplitudenverlaufs nicht ideal, so daß Fehler in der Bestimmung der Phasenlage und des Amplitudenbeitrags der Einzelsignale bezüglich Phase und Amplitude des Summensignals auftreten können. Um diese Fehler zu kompensieren ist es vorteilhaft, wenn gemäß einer weiteren Ausführungsform der Erfindung dem Summensignal zur Eichung eine weitere, vorgegebene, definierte Hilfsmodulation mittels eines Eichsignals aufgeprägt wird. Mit diesem zusätzlichen Merkmal wird also mit Hilfe eines Eichsignals eine Eichung der Empfangsschaltung vorgenommen, so daß Fehler der Empfangsschaltung, die die Übertragung der Signale negativ beeinflussen können, kompensiert werden können. Das Eichsignal kann in analoger Weise, wie dies für das Hilfsmodulationssignal für die einzelnen Antennenausgangssignale vorgesehen ist, verarbeitet werden, so daß die zuvor genannten Ausführungsformen auch auf das Eichsignal angewendet werden können.

In Zusammenhang mit der zuletzt genannten Ausführungsform ist es von Vorteil, wenn die weitere Hilfsmodulation identisch mit der Hilfsmodulation ist, die den einzelnen Antennenausgangssignalen aufgeprägt wird.

Gemäß einer weiteren Ausgestaltung der Erfindung wird die zur Eichung verwendete, weitere Hilfsmodulation einem aus einer Teilmenge der Antennenausgangssignale gebildeten Summensignal aufgeprägt, das dem nach der Änderung der Phase und/oder Amplitude des gemessenen Einzelsignales sich ergebenden Summensignales voraussichtlich am nächsten kommt. Mit dieser Ausführungsform ist eine schnellere Annäherung an das optimal erreichbare Summensignal möglich, weil das der Änderung unterworfene Einzelsignal nicht in der zur Bildung des Bezugssignals verwendeten Teilmenge der Antennenausgangssignale enthalten ist. Wurden einzelne Antennenausgangssignale beispielsweise mit Hilfe eines Stördetektors als besonders gestört ermittelt, können auch diese von der Bildung des Bezugssignals ausgenommen werden.

Im Zusammenhang mit den zuvor beschriebenen Merkmalen der Erfindung ist es weiterhin vorteilhaft, wenn den einzelnen Antennenausgangssignalen mit Ausnahme des zu ändernden Antennenausgangssignals eine Hilfsmodulation in Form einer Phasen- und/oder Amplitudenmodulation mittels eines Hilfsmodulationssignals aufgeprägt wird, und daß gleichzeitig die Hilfsmodulation dem zu ändernden Antennenausgangssignal mit entgegengesetztem Vorzeichen aufgeprägt wird. Durch diese Ausführungsform ist es möglich, die wirksame Modulationstiefe des zu ändernden Antennenausgangssignals gegenüber der bei ausschließlicher Modulation eines einzelnen Antennensignals erreichte Modulationstiefe zu verdoppeln. Damit kann ein großer Signal-Störabstand bei gleichbleibenden Modulationsverzerrungen erreicht werden.

Eine weitere vorteilhafte Ausgestaltung der Erfindung besteht darin, daß die Modulation des Summensignals durch gleichzeitige Modulation aller Antennenausgangssignale vorgenommen wird. Dies ist eine alternative Möglichkeit zu der Ausführungsform, bei der dem Summensignal zur Eichung eine weitere, vorgegebene, definierte Hilfsmodulation mittels eines Eichsignals aufgeprägt wird.

Im letztgenannten Falle, bei dem also dem Summensignal zur Eichung eine weitere vorgegebene definierte Hilfsmodulation mittels eines Eichsignals aufgeprägt wird, ist es vorteilhaft, wenn zwischen Summierer und Empfangsschaltung ein Modulator vorgesehen ist.

Die gestellte Aufgabe wird erfindungsgemäß auch mit einem Empfangsantennensystem gelöst, das folgende Merkmale aufweist : Einen den einzelnen Empfangsantennen nachgeschalteten Modulator, der den einzelnen Antennenausgangssignalen eine Hilfsmodulation mittels eines Hilfsmodulationssignals ($S_H$) aufprägt, einen Demodulator, der das in einer Empfangsschaltung verstärkte und selektierte Summensignal nach Betrag und/oder Frequenz und/oder Phase demoduliert, ein Filter, das das Hilfsmodulationssignal aus dem demodulierten Signal ausfiltert, einen Synchron-Demodulator, der den Real- und Imaginäranteil des einzelnen Antennensignals in Bezug auf das Summensignal ermittelt und daraus Phasenlage und Amplitudenbeitrag ableitet und ein Phasen- und/oder Amplitudenstellglied, das bzw. die in Abhängigkeit der Ausgangssignale der Synchron-Demodulatoren gesteuert wird bzw. werden.

Für eine besonders preiswerte Version kann der Demodulator nur aus einem Frequenz- oder Amplitudendemodulator bestehen. Hierbei kann der Demodulator im Rundfunkgerät verwendet werden.

Vorteilhaft ist es, wenn dem Demodulator ein Synchrondemodulator zur kohärenten Demodulation mit dem Hilfsmodulationssignal nachgeschaltet ist. Auf diese Weise ist es, wie bereits beschrieben, möglich, nach Real- und Imaginärteile zu selektieren und daher das Vorzeichen zu ermitteln, wodurch die Phasenlage und/oder der Amplitudenbeitrag des jeweiligen Einzelsignals bezüglich des Summensignals eindeutig bestimmt werden kann.

Gemäß einer besonders vorteilhaften Ausführungsform der Erfindung ist zwischen dem jeweiligen Modulator und der Summierschaltung jeweils ein Phasen- und/oder Amplitudenstellglied vorgesehen. Das Ausgangssignal des Demodulators wird zur Steuerung des Phasenstellglieds diesem zugeführt, so daß das jeweils ausgewertete, hochfrequente Einzelsignal in Richtung der Phase des Summensignals gedreht wird. Auf diese Weise ergibt sich eine kontinuierliche, schnelle Optimierung des Nutzsignals hinsichtlich der Störverringerung.

Besonders vorteilhaft ist es, wenn zwischen dem Demodulator und dem jeweiligen Phasendrehglied ein Analog-/Digital-Umsetzer vorgesehen ist. Auf diese Weise wird die Steuerung des jeweiligen Phasendrehglieds in Abhängigkeit vom Ausgangssignal des Demodulators digital vorgenommen, was zu einer Vereinfachung der Schaltungsanordnung führt.

Vorzugsweise werden die jeweiligen an die Antennenausgänge angeschlossenen Modulatoren nacheinander mittels eines Taktgebers aktiviert. Dieser Taktgeber kann hinsichtlich seiner Taktfrequenz fest, aber auch vom Demodulatorausgangssignal oder anderweitig gesteuert sein.

Statt einer zeitlichen Aufeinanderfolge ist es nach einer alternativen Umgestaltung der Erfindung möglich, die Messung für jedes Antennenausgangssignal bzw. jede jede Linearkombination von Antennenausgangssignalen durchzuführen, wobei für jedes Signal eine unterschiedliche Frequenz verwendet wird und dementsprechend Hilfsfrequenzgeneratoren und Synchrondemodulatoren mehrfach vorhanden sein müssen.

Eine Weiterbildung der Erfindung besteht darin, daß den Modulatoren eine Matrix-Schaltung vorgeschaltet ist, die aus den Antennenausgangssignalen Linearkombinationen bildet. Durch Linearkombinationen der eigentlichen Antennenausgangssignale läßt sich durch eine Dekorrelation und Normierung der kombinierten Signale und damit eine weitere Verbesserung der Empfangseigenschaften und Störunterdrückung des erfindungsgemäßen Empfangsantennensystems erzielen.

Der Demodulator umfaßt vorteilhafterweise einen Amplituden-Demodulator. Besonders vorteilhaft ist es, wenn der Amplituden-Demodulator ein Quasi-Synchron-Demodulator ist. Auf diese Weise wird eine Demodulation durch Mischung mit dem wieder gewonnenen Signalträger des mit der Hilfsmodulation amplitudenmodulierten Empfangssignals vorgenommen. Der Signalträger wird dabei durch Begrenzung des Empfangssignals wiedergewonnen. Dadurch wird bei Gleichkanalstörungen beispielsweise im FM-Rundfunk-Empfangsbereich nur der Betrag des im Moment stärkeren Empfangssignals gemessen. Dadurch kann beim Übergang von einem Sender zum anderen das Summensignal stärker werden, bevor dessen Modulation übernommen wird.

Die Erfindung wird nachstehend anhand eines Ausführungsbeispiels für den Ton-Rundfunkempfang erläutert. Es zeigen :

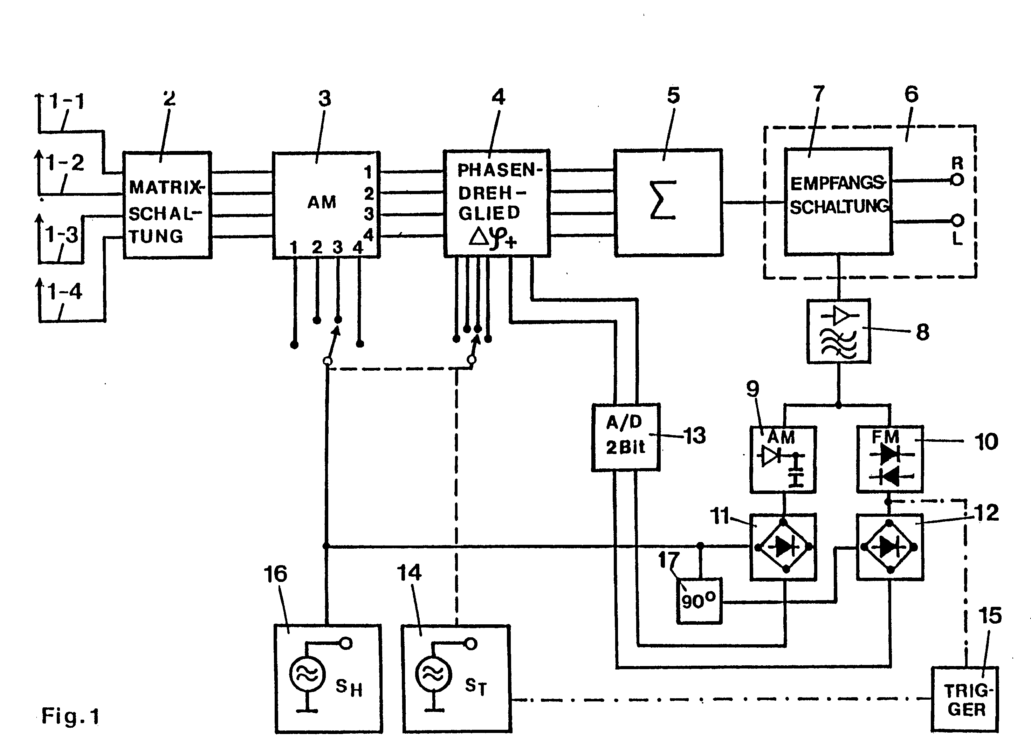

Fig. 1     eine Schaltungsanordnung zur Erläuterung des erfindungsgemäßen Empfangs-Antennenverfahrens bzw.-systems in schematischer Darstellung und

Fig. 2     ein Diagramm der Signale in Vektordarstellung zur Erläuterung der Funktionsweise des erfindungsgemäßen Verfahrens bzw. Systems.

Über Einzelantennen 1-1, 1-2, 1-3, 1-4 werden die Antennenausgangssignale einer Matrixschaltung 2 zugeleitet, an deren Ausgängen jeweils Linearkombinationen der Antenneneingangssignale bereitgestellt werden. Derartige Matrixschaltungen sind allgemein bekannt und beispielsweise in der EP 0201977 A2 beschrieben, so daß hierauf im vorliegenden Fall nicht eingegangen zu werden braucht. Die Ausgänge der Matrixschaltung 2 sind jeweils mit einem Eingang eines Amplitudenmodulators 3 verbunden. Wie im weiteren noch im einzelnen beschrieben werden wird, wird den an den Eingängen des Amplitudenmodulators 3 anliegenden Signalen nacheinander eine Hilfsmodulation aufgeprägt, wobei die zeitliche Taktfolge über die Taktsignaleingänge gesteuert wird, so daß je nachdem, an welchem Taktsignaleingang das Taktsignal anliegt, das entsprechende Eingangssignal amplitudenmoduliert am zugeordneten Ausgang des Amplitudenmodulators 3 auftritt. Der schematisch als eine Anordnung dargestellte Amplitudenmodulator 3 besteht aus vier separaten Amplitudenmodulatorstufen, die jeweils eines der Ausgangssignale der Matrixschaltung zugeleitet erhalten. Die einzelnen, separaten Amplitudenmodulatorstufen werden dabei in Abhängigkeit vom Taktsignal jeweils zeitlich nacheinander aktiviert und geben entsprechend zeitlich nacheinander die entsprechend amplitudenmodulierten, hochfrequenten Einzelsignale ab.

Dem Amplitudenmodulator 3 schließt sich ein Phasendrehglied 4 an, das für die jeweiligen amplitudenmodulierten, hochfrequenten Eingangssignale über Taktsignaleingänge vom gleichen Taktsignal, das auch dem Amplitudenmodulator 3 zugeleitet wird, die für die Eingangssignale nacheinander erfolgende Phasendrehung bewirkt. Dem Phasendrehglied 4 wird, wie nachfolgend näher erläutert wird, ein die Phasendrehung steuerndes Signal zugeleitet. Das Phasendrehglied 4 besteht aus vier separaten Phasendrehgliedern, die jeweils einem Ausgang des Amplitudenmodulators 3 zugeordnet sind und entsprechend dem besagten Taktsignal nacheinander aktiviert werden. Die Ausgangssignale des Phasendrehglieds 4 werden in einer Summierschaltung 5 addiert und dem Eingang eines Rundfunkempfängers 6 mit einer Empfangsschaltung 7 zugeleitet. Im Falle eines Stereo-Empfangs gelangen die Ausgangssignale R und L über entsprechende Leitungen an die jeweiligen Lautsprecher.

Ein zwischenfrequentes Ausgangssignal der Empfangsschaltung 7, das vor der Begrenzerstufe aus der Empfangschaltung 7 entnommen wird, gelangt über eine Verstärker- und Filterstufe 8 an einen Amplituden- und Frequenzdemodulator 9 bzw. 10, dem je ein Synchrondemodulator 11 bzw. 12 nachgeschaltet ist. Diese Demodulatoren 9, 10, 11 und 12 sind für den Fachmann übliche Schaltungen. Die Ausgangssignale der auf die Amplituden- und Frequenz-Demodulatoren 9 bzw. 10 folgenden Synchrondemodulatoren 11 bzw. 12 gelangen an einen Analog-/Digital-Umsetzer 13, dessen Ausgang mit dem Steuereingang des Phasendrehglieds 4 verbunden ist.

Ein Taktsignalgeber 14 in Form einer Oszillatorschaltung erzeugt das bereits erwähnte Taktsignal $S_T$, welches zur aufeinanderfolgenden Aktivierung des Amplitudenmodulators 3 und des Phasendrehglieds 4 an den Taktsignaleingängen dieser Schaltungen anliegt. Der Taktsignalgeber 14 ist hinsichtlich seines Einsatzzeitpunktes mit dem Ausgangssignal des Frequenzdemodulators 10 über eine Triggerschaltung 15 steuerbar.

Ein Hilfsmodulationssignalgeber 16 stellt dem jeweiligen getakteten und damit aktivierten Eingang des Amplitudenmodulators 3 das Hilfsmodulationssignal $S_H$ zur zeitlich aufeinanderfolgenden Modulation des jeweiligen hochfrequenten Einzelsignals bereit. Dieses Hilfsmodulationssignal $S_H$ gelangt auch an den dem Amplitudendemodulator 9 nachgeschalteten Synchrondemodulator 11 und mit einer Phasenverschiebung von 90°, die in einem Phasenschieber 17 erfolgt, zum Synchrondemodulator 12, der dem Frequenzdemodulator 10 nachgeschaltet ist.

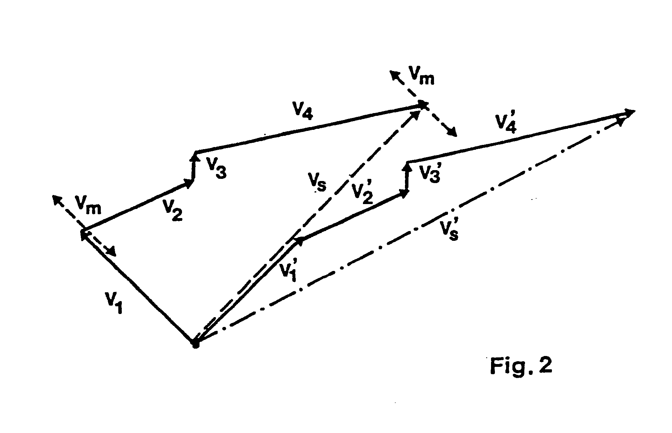

Die Arbeitsweise des schematisch dargestellten Ausführungsbeispiels wird nachfolgend unter Bezug auf Fig. 2 erläutert.

Den Ausgangssignalen der Antennen 1-1, 1-2, 1-3, 1-4 bzw. den in der Matrixschaltung 2 erzeugten Linearkombinationen der Antennenausgangssignale wird entsprechend der durch das Taktsignal $S_H$ sich ergebenden Taktfolge nacheinander das Hilfsmodulationssignal $S_H$ aufgeprägt. Vorzugsweise sind die Modulationsparameter dabei so gewählt, daß das resultierende Spektrum in einem nicht genutzten Bereich des Stereo-Multiplex-Signals, z.B. bei 62 kHz, liegt. Die Ausgangssignale des Amplitudenmodulators 3, d.h. die modulierten Einzelsignale, gelangen über ein Phasendrehglied 4 jeweils zur Summierschaltung 5, die aus den Einzelsignalen ein Summensignal bildet, das, wie bereits erwähnt, als zwischenfrequentes Signal der Empfangsschaltung 7 entnommen und in der Verstärker- und Filterstufe 8 verstärkt und gefiltert wird.

Im Amplituden- bzw. Frequenzdemodulator 9 bzw. 10 wird das Signalgemisch durch beide Detektoren nach Betrag und Phase demoduliert. Anschließend werden durch die Synchrondemodulatoren 11 bzw. 12 Real- und Imaginärteil der Hilfsmodulationssignale sowie deren Vorzeichen ermittelt. Die Ausgangssignale der Synchrondemodulatoren 11 bzw. 12 beinhalten als Real- und Imaginärteil die Information über den Amplitudenbeitrag eines Einzelsignals zur Amplitude des Summensignals bzw. die Phasenlage eines Einzelsignals bezüglich der Phasenlage des Summensignals. Diese Signale werden im Analog-/Digitalwandler 13, beispielsweise mit zwei Bit quantisiert und gelangen an das die entsprechende Phasendrehung bewirkende Phasendrehglied 4.

Wie gesagt ist in den Ausgangssignalen der Synchronmodulatoren 11 und 12 die Information hinsichtlich der Phasenlage des Einzelsignals relativ zur Phasenlage des Summensignals enthalten und dementsprechend wird das Phasendrehglied derart gesteuert, daß es in Abhängigkeit von der augenblicklich gegebenen Phasenlage und des augenblicklich vorliegenden Amplitudenbeitrags zum Summensignal für das gemessene Einzelsignal die Phase desselbesn in der Weise ändert, wie dies anhand von Fig. 2 nachfolgend erläutert wird.

In Fig. 2 sind die Phasenlagen der Einzelsignale durch ausgezogene Vektoren $V_1$, $V_2$, $V_3$, $V_4$ dargestellt, die einen Summenvektor $V_S$ bilden, der gestrichelt wiedergegeben ist. Im Ausgangssignal der Synchrondemodulatoren 11 und 12 ist nunmehr beispielsweise für das Einzelsignal V die Information enthalten, wie groß die Phasendifferenz dieses Signals gegenüber dem Summensignal V ist. Dementsprechend bewirkt dieses im Analog-/Digitalumsetzer 13 digitalisierte Signal, daß das Phasendrehglied 4 für das vorliegende, modulierte Eingangssignal eine Phasendrehung um diese Phasendifferenz, im vorliegenden Fall einer Qquantisierung mit 2-Bit um 90° bewirkt und damit eine Ausrichtung der Phasenwinkels des Vektors des Einzelsignals $V_1$ auf das Summensignal $V_S$ vornimmt. Das in der Phase gedrehte Einzelsignal $V_1$ ist durch den Vektor $V'_1$ wiedergegeben.

Bei feinerer Quantisierung der Phase könnten auch die übrigen Vektoren in entsprechender Weise an die Phase des Summensignals $S_S$ angeglichen werden. Bei einer Phasenquantisierung mit 2 Bit entsprechend Stufen von 90° wird im vorliegenden Fall wie beschrieben — allerdings nur das Einzelsignal $V_1$ phasenmäßig gedreht, da es um über 45° vom Phasenwinkel des Summensignals $V_S$ abweicht. Die Quantisierung der Phasen mit 2 Bit reicht jedoch in den meisten Fällen aus, wie dies aus Fig. 2 anhand des mit dem gedrehten Einzelsignals $V_1$ neuen Summensignals $V_{S'}$ hervorgeht.

In Fig. 2 sind am Pfeilende des Einzelsignalvektors $V_1$ die Vektoren für die Hilfs-Amplitudenmodulation $V_m$ dargestellt. Im vorliegenden Fall ist die Phase des Einzelsignalvektors $V_1$ ca. 90° gegenüber dem Summensignal $V_S$ gedreht. Dadurch wird die Amplitudenmodulation in eine Phasenmodulation umgewandelt.

Da die Ausgangssignale der Synchrondemodulatoren 11 und 12 — wie beschrieben — auch Informationen über den Amplitudenbeitrag des Einzelsignals zur Amplitude des Summensignals enthalten, kann diese Information auch für die verschiedensten Steuer- und Schaltvorgänge ausgenutzt werden. Beispielsweise ist es vorteilhaft, eine bestimmte Einzelantenne mittels dieses Signals zu deaktivieren, wenn der Amplitudenbetrag des von dieser Antenne empfangenen Einzelsignals nur einen kleinen Beitrag zum Summensignal liefert. Der Rauschbeitrag dieses Einzelsignals zum Gesamtsignal überwiegt daher und ist also für das Gesamtsignal nur schädlich.

Die Taktfolge, mit der von einem Antennenausgangssignal bzw. von einer Linearkombination zum nächsten Antennenausgangssignal bzw. zur nächsten Linearkombination von Ausgangssignalen zur Amplitudenmodulation umgeschaltet wird, d.h. die Frequenz des Taktsignals $S_1$, kann je nach den Erfordernissen gewählt und konstant sein. Bei dem dargestellten Ausführungsbeispiel wird die Taktfolge über die Triggerschaltung 15 durch das Nutzsignal selbst gesteuert, so daß sich ein optimaler Einsatzzeitpunkt für die aufeinanderfolgende Modulation der Antennenausgangssignale bzw. der Linearkombination von Antennenausgangssignalen und entsprechende Aktivierung des Phasendrehglieds für das entsprechende hochfrequente Einzelsignal ergibt.

Die vorliegende Erfindung wurde anhand eines bevorzugten Ausführungsbeispiels mit vier Antennen beschrieben. Jedoch ist das Verfahren und System auch für mehr oder weniger als vier Antennen geeignet. Vorteilhaft ist es beispielsweise auch, dem Phasendrehglied 4 des Taktsignals $S_T$ über ein Verzögerungsglied zuzuführen, damit das Phasendrehglied 4 erst dann geschaltet wird, wenn die Messung abgeschlossen ist.

Vorteilhafterweise wird das Signal des Hilfsmodulationssignalgebers 16 den Synchrondemodulatoren 11 und 12 über ein Verzögerungsglied zugeführt. Damit können Laufzeiten, die durch die Empfangsschaltung 7, die Verstärker und Filterschaltung 8 und die Demodulatoren 9 bis 12 entstehen, kompensiert werden.

EP 0 401 221 B1

## Patentansprüche

1. Empfangsverfahren mit mehreren einzelnen Empfangsantennen, bei dem einem Antennenausgangssignal eine Phasenmodulation aufgeprägt wird, die Antennensignale summiert werden und das Summensignal nach Amplitude demoduliert wird, **dadurch gekennzeichnet,** daß

— den einzelnen Antennenausgangssignalen eine Hilfsmodulation in Form einer Phasen- und/oder Amplitudenmodulation mittels eines Hilfsmodulationssignals aufgeprägt wird,

— das in einer Empfangsschaltung verstärkte und selektierte Summensignal in einem Frequenz- und Amplitudendemodulator nach Betrag und Frequenz und/oder Phase demoduliert wird,

— das Hilfsmodulationssignal aus dem demodulierten Signal ausgefiltert wird und mit Hilfe von Synchron-Demodulatoren Real- und Imaginärteil des einzelnen Antennensignals in Bezug auf das Summensignal ermittelt und daraus Phasenlage und Amplitudenbeitrag des Einzelsignals bezüglich des Summensignals abgeleitet werden, und

— die Phasen und/oder die Amplituden der hochfrequenten Einzelsignale in Abhängigkeit von der ermittelten Phasenlage und/oder des ermittelten Amplitudenbeitrags in Richtung auf optimalen Amplitudenbeitrag jeweils geändert werden.

2. Empfangsverfahren nach Anspruch 1, dadurch gekennzeichnet, daß das demodulierte Signal kohärent mit dem Hilfsmodulationssignal demoduliert wird.

3. Empfangsverfahren nach Anspruch 1 oder 2, dadurch gekennzeichnet, daß das demodulierte Signal zusätzlich mit einem um 90° verschobenen Hilfsmodulationssignal kohärent demoduliert wird, und daß das auf diese Weise erhaltene Signal zur Kompensation von Störungen eingesetzt wird, die durch nicht-ideale, zur Realisierung des Empfangsverfahrens erforderliche Bauelemente entstehen.

4. Empfangsverfahren nach einem der Ansprüche 1 oder 2, dadurch gekennzeichnet, daß, wenn die Hilfsmodulation eine Amplituden- und Phasenmodulation ist, das Verhältnis zwischen beiden Modulationsarten vom Nutzsignal gesteuert wird.

5. Empfangsverfahren nach einem der Ansprüche 1 bis 4, dadurch gekennzeichnet, daß die Phasen der hochfrequenten Einzelsignale in Abhängigkeit von der ermittelten Phasenlage in vorgegebene Phasenzustände geändert werden.

6. Empfangsverfahren nach Anspruch 5, dadurch gekennzeichnet, daß die Phasen der hochfrequenten Einzelsignale in Abhängigkeit von der ermittelten Phasenlage derart geändert werden, daß nur einseitige Richtdiagramme erzeugt werden.

7. Empfangsverfahren nach einem der Ansprüche 1 bis 6, dadurch gekennzeichnet, daß das jeweils ausgewertete hochfrequente Einzelsignal in Richtung der Phase des Summensignals gedreht wird.

8. Empfangsverfahren nach Anspruch 7, dadurch gekennzeichnet, daß die einzelnen Antennendiagramme wenigstens angenähert Runddiagramme sind.

9. Empfangsverfahren nach einem der Ansprüche 1 bis 8, dadurch gekennzeichnet, daß die Hilfsmodulation in einer vorgegebenen Taktfolge den einzelnen Antennenausgangssignalen nacheinander aufgeprägt wird.

10. Empfangsverfahren nach Anspruch 9, dadurch gekennzeichnet, daß die Taktfolge des Taktsignals in der Größenordnung von Millisekunden liegt.

11. Empfangsverfahren nach einem der Ansprüche 9 oder 10, dadurch gekennzeichnet, daß die Taktfolge des Taktsignals von der Geschwindigkeit eines Fahrzeugs abhängt.

12. Empfangsverfahren nach Anspruch 11, dadurch gekennzeichnet, daß das Signal zur Steuerung der Taktfolge des Taktsignals vom Tachometer eines Fahrzeugs abgeleitet wird.

13. Empfangsverfahren nach einem der Ansprüche 9 bis 12, dadurch gekennzeichnet, daß die Taktfolge des Taktsignals durch das Nutzsignal gesteuert wird.

14. Empfangsverfahren nach Anspruch 13, dadurch gekennzeichnet, daß die Taktfolge des Taktsignals bei Auftreten des Nulldurchgangs des Nutzsignals getriggert wird.

15. Empfangsverfahren nach einem der Ansprüche 1 bis 14, dadurch gekennzeichnet, daß aus den Antennenausgangssignalen Linearkombinationen gebildet werden, denen die Hilfsmodulation aufgeprägt wird.

16. Empfangsverfahren nach Anspruch 15, dadurch gekennzeichnet, daß die durch Linearkombination gebildeten Antennendiagramme wenigstens angenähert Runddiagramme sind.

17. Empfangsverfahren nach einem der Ansprüche 1 bis 16, dadurch gekennzeichnet, daß die Modulationsparameter der modulierten Antennenausgangssignale derart gewählt sind, daß die Hilfsmodulationsfrequenzen in einem nicht genutzten Frequenzbereich eines Übertragungskanals auftreten.

18. Empfangsverfahren nach einem der Ansprüche 1 bis 17, dadurch gekennzeichnet, daß die Antennenausgangssignale frequenzmodulierte Stereo-Multiplexsignale enthalten, und daß die mit der Hilfsmodulation modulierten Antennenausgangssignale die Hilfsmodulation in einem Frequenzbereich oberhalb 57 kHz und-

**11**

/oder um 17 und/oder 21 kHz des Stereo-Multiplexsignals enthalten.

19. Empfangsverfahren nach einem der Ansprüche 1 bis 18, dadurch gekennzeichnet, daß die Phasendifferenz zwischen dem jeweiligen Einzelsignal und dem Summensignal und/oder der Amplitudenbeitrag eines Einzelsignals zur Amplitude des Summensignals in ein Digitalsignal umgesetzt wird.

20. Empfangsverfahren nach Anspruch 19, dadurch gekennzeichnet, daß die Phasendifferenz mit 2 oder 3 Bit quantisiert wird.

21. Empfangsverfahren nach einem der Ansprüche 1 bis 20, dadurch gekennzeichnet, daß eine einzelne Empfangsantenne deaktiviert wird, wenn der Amplitudenbeitrag eines Einzelsignals zum Summensignal unter einen vorgegebenen Schwellwert absinkt.

22. Empfangnverfahren nach einem der Ansprüche 1 bis 21, dadurch gekennzeichnet, daß die Hilfsmodulation den jeweiligen Einzelsignalen während eines vorgegebenen Zeitintervalls des Nutzsignals aufgeprägt wird.

23. Empfangsverfahren nach Anspruch 22, dadurch gekennzeichnet, daß das Nutzsignal ein Video-Signal ist, und daß die Hilfsmodulation während der Zeilen- oder Bild-Austastlücke des jeweiligen Einzelsignals aufgeprägt wird.

24. Empfangsverfahren nach einem der Ansprüche 1 bis 23, dadurch gekennzeichnet, daß das Empfangsverfahren ganz oder teilweise in Abhängigkeit von einem Steuersignal aktiviert oder deaktiviert wird.

25. Empfangsverfahren nach Anspruch 24, dadurch gekennzeichnet, daß das Empfangsverfahren aktiviert oder deaktiviert wird, wenn eine vorgegebene Störschwelle überschritten wird.

26. Empfangsverfahren nach einem der Ansprüche 1 bis 25, dadurch gekennzeichnet, daß dem Summensignal zur Eichung eine weitere, vorgegebene, definierte Hilfsmodulation mittels eines Eichsignals aufgeprägt wird.

27. Empfangsverfahren nach einem der Ansprüche 1 bis 26, dadurch gekennzeichnet, daß die weitere Hilfsmodulation identisch mit der Hilfsmodulation ist, die den einzelnen Antennenausgangssignalen aufgeprägt wird.

28. Empfangsverfahren nach einem der Ansprüche 1 bis 27, dadurch gekennzeichnet, daß die zur Eichung verwendete weitere Hilfsmodulation einem aus einer Teilmenge der Antennenausgangssignale gebildeten Summensignal aufgeprägt wird, das nach Änderung der Phase und/oder Amplitude des Einzelsignals sich ergebendem Summensignal am nächsten kommt.

29. Empfangsverfahren nach einem der Ansprüche 1 bis 28, dadurch gekennzeichnet, daß den einzelnen Antennenausgangssignalen mit Ausnahme des zu ändernden Antennenausgangssignals eine Hilfsmodulation in Form einer Phasen- und/oder Amplitudenmodulation mittels eines Hilfsmodulationssignals aufgeprägt wird, und daß gleichzeitig die Hilfsmodulation dem zu ändernden Antennenausgangssignal mit entgegengesetztem Vorzeichen aufgeprägt wird.

30. Empfangsverfahren nach einem der Ansprüche 1 bis 29, da durch gekennzeichnet, daß die Modulation des Summensignals durch gleichzeitige Modulation aller Antennenausgangssignale vorgenommen wird.

31. Empfangs-Antennensystem zur Durchführung des Verfahrens nach einem der Ansprüche 1 bis 30 mit mehreren einzelnen Empfangsantennen, einem Phasenmodulator, einer Summierschaltung und einen Amplituden-Demodulator, **gekennzeichnet** durch

— einen den einzelnen Empfangsantennen (1-1, 1-2, 1-3, 1-4) nachgeschalteten Modulator (3), der den einzelnen Antennenausgangssignalen eine Hilfsmodulation mittels eines Hilfsmodulationssignals ($S_H$) aufprägt,

— einen Demodulator (9, 10), der das in einer Empfangsschaltung (7) verstärkte und selektierte Summensignal nach Betrag und/oder Frequenz und/oder Phase demoduliert,

— ein Filter (8), das das Hilfsmodulationssignal aus dem demodulierten Signal ausfiltert,

— einen Synchron-Demodulator (11, 12), der den Real- und Imaginäranteil des einzelnen Antennensignals in Bezug auf das Summensignal ermittelt und daraus Phasenlage und Amplitudenbeitrag ableitet und

— ein Phasen- und/oder Amplitudenstellglied (4) das bzw. die in Abhängigkeit der Ausgangssignale der Synchron-Demodulatoren (11, 12) gesteuert wird bzw. werden.

32. Empfangs-Antennensystem nach Anspruch 31, dadurch gekennzeichnet, daß dem Demodulator (9, 10) ein Synchrondemodulator (11, 12) zur kohärenten Demodulation mit dem Hilfsmodulationssignal ($S_H$) nachgeschaltet wird.

33. Empfangs-Antennensystem nach Anspruch 31 oder 32, dadurch gekennzeichnet, daß das Phasen- und/oder Amplitudenstellglied (4) ein Phasendrehglied (4) ist.

34. Empfangs-Antennensystem nach Anspruch 33, dadurch gekennzeichnet, daß zwischen dem Demodulator (9, 10 bzw. 11, 12) und dem Phasendrehglied (4) ein Analog-/Digital-Umsetzer (13) vorgesehen ist.

35. Empfangs-Antennensystem nach einem der Ansprüche 31 bis 34, dadurch gekennzeichnet, daß der Modulator (3) nacheinander mittels eines Taktgebers (14) aktiviert wird.

EP 0 401 221 B1

36. Empfangs-Antennensystem nach einem der Ansprüche 31 bis 35, dadurch gekennzeichnet, daß jedem Antennenausgangssignal oder jeder Linearkombination von Antennenausgangssignalen jeweils ein getrennter Hilfsmodulationssignalgeber mit jeweils unterschiedlicher Frequenz und jeweils getrennte Synchrondemodulatoren zugeordnet sind.

37. Empfangs-Antennensystem nach einem der Ansprüche 31 bis 36, dadurch gekennzeichnet, daß eine Matrixschaltung (2) vorgesehen ist, die aus den Antennensignalen Linearkombinationen bildet.

38. Empfangs-Antennensystem nach einem der Ansprüche 31 bis 37, dadurch gekennzeichnet, daß der Demodulator (9, 10) aus einem Amplituden- oder Frequenzdemodulator (9 oder 10) besteht.

39. Empfangs-Antennensystem nach Anspruch 38, dadurch gekennzeichnet, daß der Amplitudendemodulator (9, 11) ein Quasi-Synchrondemodulator ist.

40. Empfangs-Antennensystem nach einem der Ansprüche 31 bis 39, dadurch gekennzeichnet, daß zwischen dem Summierer (5) und der Empfangsschaltung (7) ein Modulator vorgesehen ist.

## Claims

1. Receiving method comprising a plurality of individual receiving antennas in which a phase modulation is superimposed on an antenna output signal, the antenna signals are summated and the summation signal amplitude demodulated, characterized in that
— on the individual antenna output signals an auxiliary modulation is superimposed in the form of a phase and/or amplitude modulation by means of an auxiliary modulation signal,
— the summation signal amplified and selected in a receiving circuit is demodulated in a frequency and amplitude demodulator in relation to magnitude and frequency and/or phase,
— the auxiliary modulation signal is filtered out of the demodulated signal and with the aid of synchronous demodulators real and imaginary parts of the individual antenna signal are determined with respect to the summation signal and therefrom the phase position and amplitude contribution of the indvidual signal in relation to the summation signal are derived, and
— the phases and/or the amplitudes of the high-frequency individual signals are each changed in dependence upon the determined phase position and/or the determined amplitude contribution in the direction towards optimum amplitude contribution.

2. Receiving method according to claim 1, characterized in that the demodulated signal is demodulated coherently with the auxiliary modulation signal.

3. Receiving method according to claim 1 or 2, characterized in that the demodulated signal is additionally coherently demodulated with an auxiliary modulation signal phase-shifted through 90° and that the signal obtained in this manner is used to compensate interference arising through non-ideal components necessary for implementation of the receiving method.

4. Receiving method according to any one of claims 1 or 2, characterized in that when the auxiliary modulation is an amplitude and phase modulation the ratio between the two modulation types is controlled by the useful signal.

5. Receiving method according to any one of claims 1 to 4, characterized in that the phases of the high-frequency individual signals are changed in dependence upon the phase position determined in predetermined phase states.

6. Receiving method according to claim 5, characterized in that the phases of the high-frequency individual signals are changed depending on the phase position determined in such a manner that only unilateral directional patterns are generated.

7. Receiving method according to any one of claims 1 to 6, characterized in that the particular evaluated high-frequency individual signal is rotated in the direction of the phase of the summation signal.

8. Receiving method according to claim 7, characterized in that the individual antenna patterns are at least approximately circular patterns.

9. Receiving method according to any one of claims 1 to 8, characterized in that the auxiliary modulation is consecutively superimposed on the individual antenna output signals in a predetermined clock sequence.

10. Receiving method according to claim 9, characterized in that the clock sequence of the clock signal is of the order of magnitude of milliseconds.

11. Receiving method according to any one of claims 9 or 10, characterized in that the clock sequence of the clock signal depends on the speed of a vehicle.

12. Receiving method according to claim 11, characterized in that the signal for controlling the clock sequence of the clock signal is derived from the tachometer of a vehicle.

13. Receiving method according to any one of claims 9 to 12, characterized in that the clock sequence of

13

EP 0 401 221 B1

the clock signal is controlled by the useful signal.

14. Receiving method according to claim 13, characterized in that the clock sequence of the clock signal is triggered on occurrence of the zero passage of the useful signal.

15. Receiving method according to any one of claims 1 to 14, characterized in that from the antenna output signals linear combinations are formed on which the auxiliary modulation is superimposed.

16. Receiving method according to claim 15, characterized in that the antenna patterns formed by linear combination are at least approximately circular patterns.

17. Receiving method according to any one of claims 1 to 16, characterized in that the modulation parameters of the modulated antenna output signals are selected in such a manner that the auxiliary modulation frequencies occur in an unused frequency range of a transmission channel.

18. Receiving method according to any one of claims 1 to 17, characterized in that the antenna output signals contain frequency-modulated stereo multiplex signals and that the antenna output signals modulated with the auxiliary modulation contain the auxiliary modulation in a frequency range above 57 kHz and/or around 17 and/or 21 kHz of the stereo multiplex signal.

19. Receiving method according to any one of claims 1 to 18, characterized in that the phase difference between the respective individual signal and the summation signal and/or the amplitude contribution of an individual signal to the amplitude of the summation signal is converted to a digital signal.

20. Receiving method according to claim 19, characterized in that the phase difference is quantized with 2 or 3 bits.

21. Receiving method according to any one of claims 1 to 20, characterized in that an individual receiving antenna is deactivated when the amplitude contribution of an individual signal to the summation signal drops below a predetermined threshold value.

22. Receiving method according to any one of claims 1 to 21, characterized in that the auxiliary modulation is superimposed on the respective individual signals during a defined time interval of the useful signal.

23. Receiving method according to claim 22, characterized in that the useful signal is a video signal and that the auxiliary modulation is superimposed during the line or frame blanking interval of the respective individual signal.

24. Receiving method according to any one of claims 1 to 23, characterized in that the receiving method is activated or deactivated entirely or partially in dependence upon a control signal.

25. Receiving method according to claim 24, characterized in that the receiving method is activated or deactivated when a predetermined interference threshold is exceeded.

26. Receiving method according to any one of claims 1 to 25, characterized in that on the summation signal for calibration a further predetermined defined auxiliary modulation is superimposed by means of a calibration signal.

27. Receiving method according to any one of claims 1 to 26, characterized in that the further auxiliary modulation is identical to the auxiliary modulation which is superimposed on the individual antenna output signals.

28. Receiving method according to any one of claims 1 to 27, characterized in that the further auxiliary modulation used for the calibration is superimposed on a summation signal which is formed from a subset of the antenna output signals and which comes closest to the summation signal resulting after the change of the phase and/or amplitude of the individual signal.

29. Receiving method according to any one of claims 1 to 28, characterized in that on the individual antenna output signals except for the antenna output signal to be changed an auxiliary modulation is imposed in the form of a phase and/or amplitude modulation by means of an auxiliary modulation signal and that at the same time the auxiliary modulation is superimposed on the antenna output signal to be changed with opposite sign.

30. Receiving method according to any one of claims 1 to 29, characterized in that the modulation of the summation signal is effected by simultaneous modulation of all the antenna output signals.

31. Receiving antenna system for carrying out the method according to any one of claims 1 to 30 comprising a plurality of receiving antennas, a phase modulator, a summation circuit and an amplitude demodulator, characterized by

— a modulator (3) which follows the individual receiving antennas (1-1, 1-2, 1-3, 1-4) and which superimposes on the individual antenna signals an auxiliary modulation by means of an auxiliary modulation signal $(S_H)$,

— a demodulator (9, 10) which demodulates the summation signal amplified and selected in a receiving circuit (7) in relation to quantity and/or frequency and/or phase,

— a filter (8) which filters the auxiliary modulation signal from the demodulated signal,

— a synchronous demodulator (11, 12) which determines the real and imaginary parts of the individual antenna signal in relation to the summation signal and derives therefrom the phase position and amplitude

14

EP 0 401 221 B1

contribution and

— a phase and/or amplitude setting member (4) which is or are controlled in dependence upon the output signals of the synchronous demodulators (11, 12).

32. Receiving antenna system according to claim 31, characterized in that a synchronous demodulator (11, 12) is connected after the demodulator (9, 10) for coherent demodulation with the auxiliary modulation signal ($S_H$).

33. Receiving antenna system according to claim 31 or 32, characterised in that the phase and/or amplitude control member (4) is a phase-shift element (4).

34. Receiving antenna system according to claim 33, characterized in that between the demodulator (9, 10 or 11, 12) and the phase-shift element (4) an analog/digital converter is provided.

35. Receiving antenna system according to any one of claims 31 to 34, characterized in that the modulator (3) is activated consecutively by means of a clock generator (14).

36. Receiving antenna system according to any one of claims 31 to 35, characterized in that with each antenna output signal or each linear combination of antenna output signals in each case a separate auxiliary modulation signal generator each having a different frequency and in each case separate synchronous demodulators are associated.

37. Receiving antenna system according to any one of claims 31 to 36, characterized in that a matrix circuit (2) is provided which forms linear combinations from the antenna signals.

38. Receiving antenna system according to any one of claims 31 to 37, characterized in that the demodulator (9, 10) consists of an amplitude or frequency demodulator (9 or 10).

39. Receiving antenna system according to claim 38, characterized in that the amplitude demodulator (9, 11) is a quasi synchronous demodulator.

40. Receiving antenna system according to any one of claims 31 to 39, characterized in that between the summation circuit (5) and the receiving circuit (7) a modulator is provided.

## Revendications

1. Procédé de réception à plusieurs antennes réceptrices, pour lequel on imprime une modulation de phase à un signal de sortie d'antenne, on effectue la somme des signaux d'antenne et l'on démodule en amplitude le signal d'antenne, caractérisé en ce que

— l'on imprime aux différents signaux de sortie d'antenne une modulation auxiliaire, sous forme d'une modulation de phase et/ou d'amplitude, à l'aide d'un signal de modulation auxiliaire,

— l'on démodule dans un circuit récepteur le signal de somme amplifié et sélectionné, dans un démodulateur de fréquence et de phase, suivant l'amplitude et la fréquence et/ou la phase,

— l'on sépare par filtration le signal de modulation auxiliaire d'avec le signal démodulé et, à l'aide de démodulateurs synchrones, on détermine les parties réelle et imaginaire du signal d'antenne individuel par rapport au signal de somme et l'on en déduit la position en phase de la contribution en amplitude du signal individuel par rapport au signal de somme, et

— l'on modifie respectivement les phases et/ou les amplitudes des signaux à haute fréquence, en fonction de la position en phase déterminée et/ou de la contribution en amplitude déterminée, en direction de l'obtention d'une contribution en amplitude optimale.

2. Procédé de réception selon la revendication 1, caractérisé en ce que le signal démodulé est démodulé de façon cohérente à l'aide du signal de modulation auxiliaire.

3. Procédé de réception selon la revendication 1 ou 2, caractérisé en ce que le signal démodulé est en plus démodulé de façon cohérente à l'aide d'un signal de modulation auxiliaire décalé de 90°, et que le signal obtenu de cette manière est utilisé pour procéder à la compensation des parasites qui se manifestent suite au caractère non-idéal des composants nécessaires à la réalisation du procédé de réception.

4. Procédé de réception selon l'une des revendications 1 ou 2, caractérisé en ce que, si la modulation auxiliaire est une modulation d'amplitude et de phase, le rapport entre les deux types de modulation est commandé par le signal utile.

5. Procédé de réception selon l'une des revendications 1 à 4, caractérisé en ce que les phases des différents signaux à haute fréquence sont modifiées en fonction de la position en phase déterminée dans des états de phase prédéterminés.

6. Procédé de réception selon la revendication 5, caractérisé en ce que les phases des différents signaux à haute fréquence sont modifiées en fonction de la position en phase déterminée, de sorte que ne soit produits que des diagrammes de rayonnement unilatéraux.

7. Procédé de réception selon l'une des revendications 1 à 6, caractérisé en ce que chaque signal individuel à haute fréquence exploité est tourné dans le sens de la phase du signal de somme.

8. Procédé de réception selon la revendication 7, caractérisé en ce que les différents diagrammes d'antenne sont au moins à peu près des diagrammes circulaires.

9. Procédé de réception selon l'une des revendications 1 à 8, caractérisé en ce que la modulation auxiliaire est imprimée, dans une succession d'impulsions prédéterminée, aux différents signaux de sortie d'antenne, pris les uns après les autres.

10. Procédé de réception selon la revendication 9, caractérisé en ce que la succession d'impulsions du signal de cadencement est de l'ordre de grandeur de la milliseconde.

11. Procédé de réception selon l'une des revendications 9 ou 10, caractérisé en ce que la succession d'impulsions du signal de cadencement est fonction de la vitesse d'un véhicule.

12. Procédé de réception selon la revendication 11, caractérisé en ce que le signal servant à la commande de la succession d'impulsions est dérivé du tachymètre d'un véhicule.

13. Procédé de réception selon l'une des revendications 1 à 12, caractérisé en ce que la succession d'impulsions du signal de cadencement est commandée par le signal utile.

14. Procédé de réception selon la revendication 13, caractérisé en ce que la succession d'impulsions du signal de cadencement est déclenchée lors de l'apparition du passage à zéro du signal utile.

15. Procédé de réception selon l'une des revendications 1 à 14, caractérisé en ce que des combinaisons linéaires, auxquelles on imprime la modulation auxiliaire, sont formées à partir des signaux de sortie d'antenne.

16. Procédé de réception selon la revendication 15, caractérisé en ce que les diagrammes d'antenne formés par combinaison linéaire sont au moins à peu près des diagrammes circulaires.

17. Procédé de réception selon l'une des revendications 1 à 16, caractérisé en ce que les paramètres de modulation des signaux de sortie d'antenne modulés sont choisis tels que les fréquences de modulation auxiliaire surviennent dans une plage de fréquence non utilisée d'un canal de transmission.

18. Procédé de réception selon l'une des revendications 1 à 17, caractérisé en ce que les signaux de sortie d'antenne contiennent des signaux stéréo-multiplex modulés en fréquence, et que les signaux de sortie d'antenne modulés à l'aide de la modulation auxiliaire contiennent la modulation auxiliaire dans une plage de fréquence située au-dessus de 57 kHz et/ou autour de 17 et/ou 21 kHz à la fréquence du signal stéréo-multiplex.

19. Procédé de réception selon l'une des revendications 1 à 18, caractérisé en ce que la différence de phase entre chaque signal individuel et le signal de somme et/ou la contribution en amplitude d'un signal individuel par rapport à l'amplitude du signal de somme est convertie en un signal numérique.

20. Procédé de réception selon la revendication 19, caractérisé en ce que la différence de phase est quantifiée par 2 ou 3 Bit.

21. Procédé de réception selon l'une des revendications 1 à 20, caractérisé en ce qu'une antenne réceptrice individuelle est désactivée si la contribution à l'amplitude d'un signal individuel par rapport au signal de somme descend au-dessous d'une valeur de seuil prédéterminée.

22. Procédé de réception selon la revendication 1, caractérisé en ce que la modulation auxiliaire est imprimée aux différents signaux individuels pendant un intervalle de temps prédéterminé du signal utile.

23. Procédé de réception selon la revendication 22, caractérisé en ce que le signal utile est un signal vidéo et que la modulation auxiliaire est imprimée pendant les intervalles ou temps morts d'exploration de lignes ou d'image de chaque signal individuel.

24. Procédé de réception selon l'une des revendications 1 à 23, caractérisé en ce que le signal de réception est activé ou désactivé entièrement ou partiellement en fonction d'un signal de commande.

25. Procédé de réception selon la revendication 24, caractérisé en ce que le procédé de réception est activé ou désactivé si un seuil de parasite prédéterminé est dépassé.

26. Procédé de réception selon l'une des revendications 1 à 25, caractérisé en ce qu'on imprime au signal de somme un autre signal, pour l'étalonnage d'une deuxième modulation auxiliaire prédéterminée définie, à l'aide d'un signal d'étalonnage.

27. Procédé de réception selon l'une des revendications 1 à 26, caractérisé en ce que la deuxième modulation auxiliaire est identique à la modulation auxiliaire qui a été imprimée aux différents signaux de sortie d'antenne.

28. Procédé de réception selon l'une des revendications 1 à 27, caractérisé en ce que la deuxième modulation auxiliaire, utilisée pour l'étalonnage, est imprimée à un signal de somme, formé d'une quantité partielle des signaux de sortie d'antenne, qui vient en premier à la suite de la modification de phase et/ou d'amplitude du signal individuel.

29. Procédé de réception selon l'une des revendications 1 à 28, caractérisé en ce qu'une modulation auxiliaire, ayant la forme d'une modulation de phase et/ou d'amplitude, est imprimée, à l'aide d'un signal de modulation auxiliaire, aux différents signaux de sortie à l'exception du signal de sortie d'antenne à modifier, et que l'on imprime simultanément la modulation de phase au signal d'antenne à modifier, avec une inversion de signe.

30. Procédé de réception selon l'une des revendications 1 à 29, caractérisé en ce que la modulation du signal de somme est effectuée par modulation simultanée de tous les signaux de sortie d'antenne.

31. Système d'antennes réceptrices pour la mise en oeuvre du procédé selon l'une des revendications 1 à 30, avec plusieurs antennes réceptrices individuelles, un modulateur de phase, un circuit sommateur et un démodulateur d'amplitude, caractérisé par

— un démodulateur (3), monté en aval des différentes antennes réceptrices (1-1, 1-2, 1-3, 1-4), qui imprime aux différents signaux de sortie d'antenne une modulation auxiliaire à l'aide d'un signal de modulation auxiliaire ($S_H$),

— un démodulateur (9, 10), qui démodule, selon l'intensité et/ou la fréquence et/ou la phase, le signal de somme, amplifié dans un circuit récepteur (7) et sélectionné,

— un filtre (8), qui sépare par filtration le signal de modulation auxiliaire du signal démodulé,

— un démodulateur synchrone (11, 12), qui détermine les parties réelle et imaginaire de chaque signal d'antenne par rapport au signal de somme et en déduit la position de phase et la contribution en amplitude, et

— un organe de réglage de phase et/ou d'amplitude (4), qui est, ou sont, commandé(s) en fonction des signaux de sortie des démodulateurs synchrones (11, 12).

32. Système d'antennes réceptrices selon la revendication 31, caractérisé en ce qu'un démodulateur synchrone (11, 12) servant à effectuer une démodulation cohérente à l'aide du signal de modulation auxiliaire ($S_H$) est branché en circuit en aval du démodulateur (9, 10).

33. Système d'antennes réceptrices selon la revendication 31 ou 32, caractérisé en ce que l'organe de réglage de phase et/ou d'amplitude (4) est un organe de rotation de phase (4).

34. Système d'antennes réceptrices selon la revendication 33, caractérisé en ce qu'un convertisseur analogique/numérique (13) est prévu entre le démodulateur (9, 10, respectivement 11, 12) et l'organe de rotation de phase (4).

35. Système d'antennes réceptrices selon l'une des revendications 31 à 34, caractérisé en ce que le modulateur (3) est activé successivement au moyen d'un cadenceur (14).

36. Système d'antennes réceptrices selon l'une des revendications 31 à 35, caractérisé en ce qu'un transmetteur de signal de modulation auxiliaire séparé à fréquence individuelle différente et des démodulateurs séparés sont associés à chaque signal de sortie d'antenne ou à chaque combinaison linéaire de signaux de sortie d'antenne.

37. Système d'antennes réceptrices selon l'une des revendications 31 à 36, caractérisé en ce qu'est prévu un circuit matriciel (2) qui forme des combinaisons linéaires à partir des signaux d'antenne.

38. Système d'antennes réceptrices selon l'une des revendications 31 à 37, caractérisé en ce que le démodulateur (9, 10) se compose d'un démodulateur d'amplitude ou de fréquence (9 ou 10).

39. Système d'antennes réceptrices selon la revendication 38, caractérisé en ce que le démodulateur d'amplitude (9, 11) est un démodulateur quasi-synchrone.

40. Système d'antennes réceptrices selon l'une des revendications 31 à 39, caractérisé en ce qu'un démodulateur est prévu entre l'additionneur (5) et le circuit récepteur (7).

Fig. 1

EP 0 401 221 B1

Fig. 2